(19) Europäisches Patentamt
European Patent Office
Office européen des brevets

(11) **EP 1 935 754 A1**

(12) **EUROPÄISCHE PATENTANMELDUNG**

(43) Veröffentlichungstag:
**25.06.2008 Patentblatt 2008/26**

(51) Int Cl.:
***B62D 5/04*** *(2006.01)*

(21) Anmeldenummer: **07119086.2**

(22) Anmeldetag: **23.10.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(30) Priorität: **21.12.2006 DE 102006062192**

(71) Anmelder: **ZF Lenksysteme GmbH**
**73527 Schwäbisch Gmünd (DE)**

(72) Erfinder:
- **Bönsch, Michael**
  **73540 Heubach (DE)**
- **Heilig, Arnulf**
  **73529 Schwäbisch Gmünd (DE)**
- **Rettenmeier, Claudio**
  **73489 Jagstzell (DE)**

(54) **Verfahren und Steuereinheit zum Betrieb einer elektrischen Servolenkung**

(57) Zur Kompensation von Störmomenten im Lenkstrang einer elektrischen Hilfskraftlenkung wird vorgeschlagen, dass ein Kompensationsanteil (Kn) zur Kompensation von sich auf die Lenkhandhabe (2) rückwirkende kinetischen Störmomenten im Lenkstrang (3) einer elektrischen Servolenkung (1) ermittelt wird, wobei die kinetischen Störmomente von im Lenkstrang (3) befindlichen mechanischen Gelenken verursacht sind.

Fig. 3

EP 1 935 754 A1

**Beschreibung**

Die Erfindung betrifft ein Verfahren zum Betreiben einer elektrischen Servolenkung nach dem Oberbegriff des Anspurchs1.

Die Erfindung betrifft auch eine Steuereinheit einer elektrischen Servolenkung, die nach dem erfindungsgemäßen Verfahren arbeitet.

Aus dem Stand der Technik sind verschiedene Kompensationsverfahren bekannt, die in der Lage sind, das vom Fahrer an der Lenkhandhabe wahrgenommene Lenkmoment zu beeinflussen.

So ist beispielsweise in der DE103 45 484 A1 wird ein Verfahren zur Kompensation von sperrdifferentialinduzierten Lenkradstörmomenten bei frontgetriebenen Kraftfahrzeugen offenbart.

Aufgabe der Erfindung ist es, während des Durchlenkens dem Fahrer verbessertes Lenkgefühl zu vermitteln. Diese Aufgabe wird mit den kennzeichnenden Merkmalen des Hautpanspruchs gelöst, indem wenigstens ein Kompensationsanteil zur Kompensation von auf die Lenkhandhabe rückwirkenden kinetischen Störmomenten im Lenkstrang einer elektrischen Servolenkung ermittelt wird, wobei die kinetischen Störmomente von im Lenkstrang befindlichen mechanischen Bauteilen verursacht sind.

Weitere Ausgestaltungen der Erfindung sind in den Unteransprüchen angegeben.

Fig. 1 zeigt eine elektrische Servolenkung, die zum Betrieb des erfindungsgemäßen Verfahrens geeignet ist.

Fig. 2 zeigt einen typischen Lenkmoment an der Lenkhandhabe, wie er entsteht, ohne einer erfindungsgemäßen Kompensation.

Fig. 3 zeigt die bevorzugte Ausführungsform des erfindungsgemäßen Verfahrens anhand eines Datenfluss/ Datenverarbeitungs-Plans.

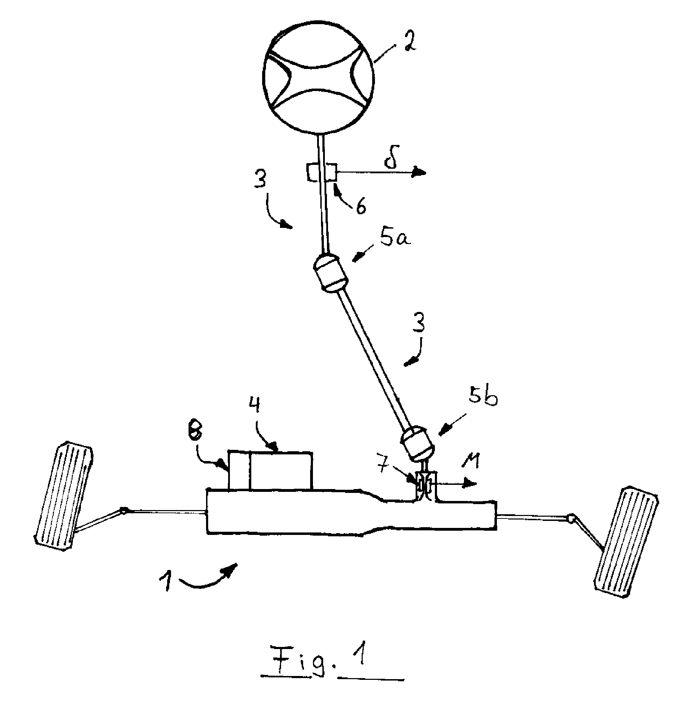

Figur 1 zeigt eine elektrische Hilfskraftlenkung, die für den erfindungsgemäßen Betrieb geeignet ist. Ein Lenkrad 2 ist mechanisch über Lenkstrang-Gestänge 3 mit der Eingangswelle der elektrischen Servolenkung 1 verbunden. Damit ein einbaubedingter Winkelversatz zwischen dem Lenkrad 2 und der Eingangswelle der Servolenkung ausgeglichen werden kann, befinden sich zwei Kreuzgelenke 5a, 5b im Lenkstrang. In einer an sich bekannten Art und Weise wird im Bereich der Eingangswelle der Servolenkung das in der Lenksäule momentan auftretende Drehmoment mittels eines Drehmoment-Sensors 7 abgefühlt und eine Information M, die zur Ermittlung des Drehmoments geeignet ist, einer Steuereinheit 8 zugeführt. Die Steuereinheit 8 berechnet daraus eine Sollvorgabe für ein Unterstützungsmoment. Über einen Regler wird ein elektrischer Strom bestimmt, der über eine Endstufe in den Elektromotor 4 eingeprägt wird.

Das vom Elektromotor 4 aufgebrachte Unterstützungsmoment wird mittels eines Antriebsmechanismus in die Zahnstange eingeprägt.

Die Zahnstange ist in bekannter Weise mittels Spurstangen zur Verstellung der Winkelstellung der gelenkten Räder mit diesen verbunden.

Dadurch, dass ein Kreuzgelenk 5a oder 5b im Lenkstrang angeordnet ist, entstehen Störmomente aufgrund der nicht- homogenen kinetischen Übersetzungs- bzw. Momenten- Charakteristik des Gelenks beim Durchlenken.

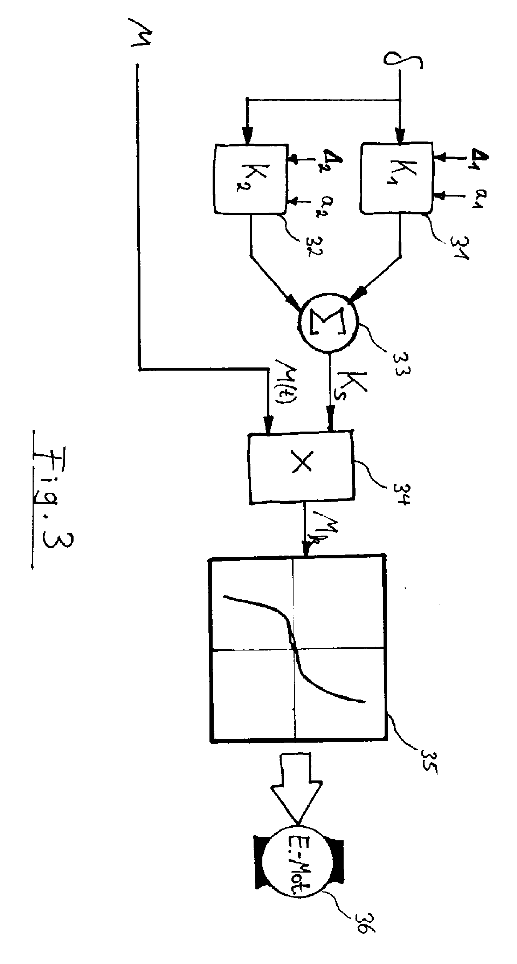

Figur 3 zeigt schematisch die bevorzugte Ausführungsform des erfindungsgemäßen Verfahrens.

Das kinematische Verhalten jedes der Gelenke 5a, 5b wir mittels eines Satzes von Parameter-Paaren beschrieben. Diese können einerseits aus geometrischen Daten berechnet werden, oder alternativ hierzu, durch eine Vermessung bestimmt werden. Diese Größen sind zum einen ein Amplituden-Faktor $a_n$ und eine Phasenverschiebungs- Größe $\Delta_n$.

Die aus einem Lenkwinkelsensor 6 (s. Fig.1) stammende Lenkwinkelinformation $\delta$ wird zusammen mit den jeweiligen Parametrisierungsgrößen jeweils einem zugeordneten Kompensationsanteil- Bestimmungs- Gliedern 31, 32 zugeführt. Beide Kompensationsanteile werden im Folgenden zur Bestimmung eines Gesamt-Kompensationsanteils $K_S$ einer Summationsstelle 33 zugeführt. In einer Verrechnungsstelle 34 wird aus dem Gesamt-Kompensationsanteil $K_S$ und der abgefühlten Drehmomentinformation M ein korrigiertes Drehmoment $M_K$ gewonnen, welches einem Unterstützungsmoment- Bestimmungsglied 25 zugeführt wird. Aus einer dort hinterlegten Kennlinie wird die Sollvorgabe für das vom Elektro-Motor 36 aufzubringende Unterstützungsmoment in Abhängigkeit des korrigierten Drehmoments vorgenommen.

Die kinematische Inhomogenität ist auf den Übersetzungsfehler jedes der Kreuzgelenke (5a, 5b) zurückzuführen und lässt sich mit nachfolgender Gleichung beschreiben:

$$e_n = \sin( \delta / (180°) * 2\pi + \Delta_n ) * a_n$$

wobei
$e_n$ = Übersetzungsfehler

$\delta$ = Lenkwinkel

$\Delta_n$ = Phasenversatz

An = Amplitude

Um diesen Effekt am Lenkrad kompensieren zu können, muss der Kompensationsanteil dem Übersetzungsfehler gegen wirken.

So entspricht der Kompensationsanteil $K_1$ des ersten Gelenks dem Kehrwert des Fehlers, also $1 / (1+e_1)$, der Kompensationsanteil $K_2$ des zweiten Gelenks $K_2$ dem Kehrwert des Übersetzungsfehlers $1 / (1+e_2)$.

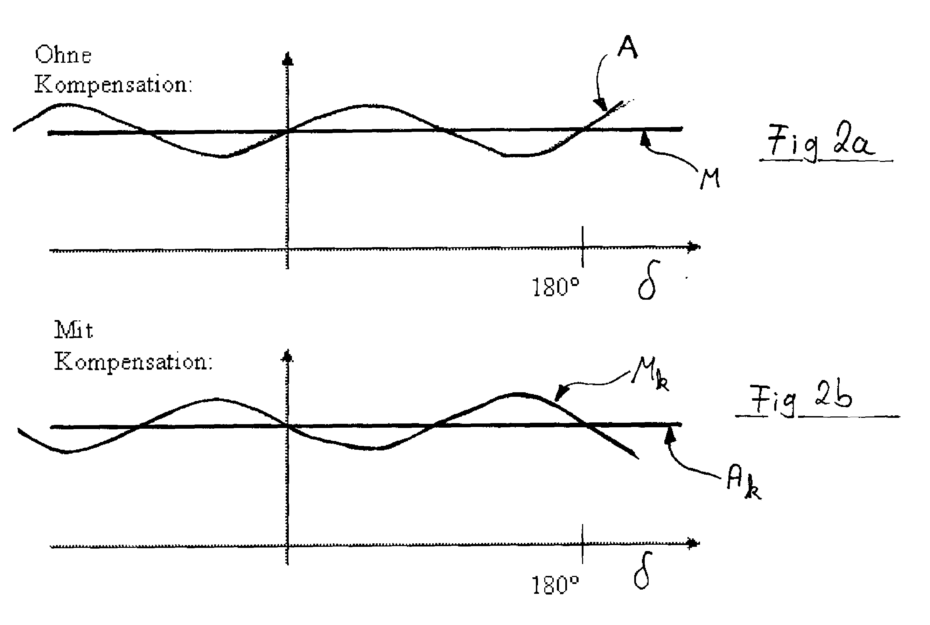

Zur Veranschaulichung der Auswirkung des erfindungsgemäßen Verfahrens dienen die Figuren 2a und 2b.

Figur 2a zeigt die Situation für den Fall, bei dem lediglich ein Kreuzgelenk im Lenkstrang angeordnet ist, ohne die Anwendung des erfindungsgemäßen Verfahrens:

Die momentenbeschreibenden Größen A und M sind über einen Lenkwinkelwert $\delta$ aufgetragen. Die Kurve A zeigt den vom Kreuzgelenk herrührenden inhomogenen Momentenverlaufs in einem Wellenabschnitt 3 der Lenksäule, wie er vom Fahrer am Lenkrad wahrgenommen werden kann. Die Kurve M zeigt zur Vereinfachung einen über den gesamten Lenkwinkelbereich konstant angenommenen Drehmomentverlauf wie vom Drehmomentsensor 7 (s. Fig. 1) abgefühlt ist. Dieser Wert ist im Wesentlichen abhängig vom eingeregelten Unterstützungsmoment.

Figur 2b zeigt die Situation mit Anwendung des erfindungsgemäßen Verfahrens:

Der Summen-Kompensationsanteil $K_S$ bewirkt ein kompensiertes Drehmoment $M_k$, welches dem vom Kreuzgelenk herrührenden Störmoment im Lenkstrang gegengerichtet wirkt, sodass das Störmoment, wie aus dem Kurvenverlauf Ak ersichtlich, am Lenkrad kompensiert ist.

**Patentansprüche**

1. Verfahren zum Betrieb einer elektrischen Servolenkung für ein Kraftfahrzeug, mit

   - einem Elektromotor (4) zur Unterstützung eines mittels einer Lenkhandhabe (2) in den Lenkstrang (3) eingeleiteten Lenkmoments
   - einem Lenkwinkelsensor (6) zur Abfühlung eines Lenkwinkels $\delta$,
   - einem Drehmomentsensor (7) zur Abfühlung eines Drehmoments (M), und
   - einer Steuereinheit(8), zur Steuerung/Regelung eines Abgabemoments des Elektromotors (4), **dadurch gekennzeichnet, dass**

   wenigstens ein Kompensationsanteil (Kn) zur Kompensation von sich auf die Lenkhandhabe (2) rückwirkende kinetischen Störmomenten im Lenkstrang (3) einer elektrischen Servolenkung (1) ermittelt wird, wobei die kinetischen Störmomente von im Lenkstrang (3) befindlichen mechanischen Gelenken verursacht sind.

2. Verfahren nach Anspruch 1, **dadurch gekennzeichnet, dass** wenigstens ein Kompensationsanteil (Kn) eine um einen Phasenversatz ($\Delta_n$) verschiebbare Periodizität aufweist, die mit einer kinetischen Periodizität des im Lenkstrang zur Umlenkung einer Drehbewegung befindlichen Gelenks (5a, 5b) korreliert.

3. Verfahren nach Anspruch 1 oder 2, **dadurch gekennzeichnet, dass** wenigstens ein Kompensationsanteil (Kn) in Abhängigkeit einer abgefühlten Lenkwinkelinformation ($\delta$) ermittelt wird.

4. Verfahren nach einem der vorstehenden Ansprüche 1 bis 3, **dadurch gekennzeichnet, dass** wenigstens ein Kompensationsanteil (Kn) mit einem in einem Wellenabschnitt 3 der Lenksäule gemessenen Drehmoment (M) verrechnet wird und zur Beeinflussung eines vom Servomotor abgegebenen Unterstützungsmoments verwendet wird.

5. Verfahren nach einem der vorstehenden Ansprüche, **dadurch gekennzeichnet, dass** wenigstens zwei Kompensationsanteile (K1,K2) zur Bildung eines Summen-Kompensationsanteils (KS) additiv überlagert werden und der Summen-Kompensationsanteil (KS) zur Beeinflussung eines vom Servomotor abgegebenen Unterstützungsmoments verwendet wird.

6. Verfahren nach einem der vorstehenden Ansprüchen 1 bis 5 , **dadurch gekennzeichnet, dass** wenigstens ein Kompensationsanteil (Kn) eine sinusförmige Periodizität aufweist, die durch die Gleichung

$$1 / (1+ \sin( \delta / (180°) * 2\pi + \Delta_n ) * a_n)$$

beschrieben werden kann , wobei

- $a_n$ ein Verstärkungsfaktor darstellt,
- $\Delta_n$ einen Phasenversatz bezüglich des gemessenen Lenkwinkels, und
- $\delta$ der gemessene Lenkwinkel

repräsentiert.

**7.** Steuergerät einer elektrischen Servolenkung, **dadurch gekennzeichnet, dass** ein Computerprogramm mit Programmcodemittel hinterlegt und zur Ausführung bereitgehalten ist, welches nach einem der in den Ansprüchen 1 bis 6 beschriebenen Verfahren arbeitet.

Fig. 1

Fig 2a

Fig 2b

Fig.3

<table>
<tr><td colspan="2"><strong>Europäisches<br>Patentamt</strong></td><td><strong>EUROPÄISCHER RECHERCHENBERICHT</strong></td><td colspan="2"><strong>Nummer der Anmeldung</strong><br>EP 07 11 9086</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 650 106 A (BAYERISCHE MOTOREN WERKE AG [DE]) 26. April 2006 (2006-04-26) | 1-5,7 | INV.<br>B62D5/04 |
| Y | * Absätze [0005] - [0012] *<br>* Absatz [0020] *<br>* Abbildungen 1a,1b,2 *<br>* Ansprüche 1-4 *<br>----- | 6 | |
| X | WO 2004/031022 A (KOYO STEERING EUROP K S E [FR]; DEVILLE JEAN-LUC [FR]) 15. April 2004 (2004-04-15) | 1,3,7 | |
| Y | * Ansprüche 1,2 *<br>* Abbildung 5 *<br>----- | 6 | |
| A | DE 43 26 992 A1 (HONDA MOTOR CO LTD [JP]) 17. Februar 1994 (1994-02-17)<br>Das ganze Dokument<br>----- | 1,3,7 | |
| A | EP 1 331 158 A (FORD GLOBAL TECH INC [US]) 30. Juli 2003 (2003-07-30)<br>Das ganze Dokument<br>----- | 1,7 | |

**RECHERCHIERTE SACHGEBIETE (IPC)**

B62D

Der vorliegende Recherchenbericht wurde für alle Patentansprüche erstellt

| Recherchenort | Abschlußdatum der Recherche | Prüfer |
|---|---|---|
| München | 26. März 2008 | Colonna, Massimo |

**ANHANG ZUM EUROPÄISCHEN RECHERCHENBERICHT**
**ÜBER DIE EUROPÄISCHE PATENTANMELDUNG NR.**

EP 07 11 9086

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-03-2008

| Im Recherchenbericht angeführtes Patentdokument | | Datum der Veröffentlichung | Mitglied(er) der Patentfamilie | | Datum der Veröffentlichung |
|---|---|---|---|---|---|
| EP 1650106 | A | 26-04-2006 | DE 102004051338 | A1 | 27-04-2006 |
| WO 2004031022 | A | 15-04-2004 | AU 2003279433<br>FR 2845341 | A1<br>A1 | 23-04-2004<br>09-04-2004 |
| DE 4326992 | A1 | 17-02-1994 | JP 6056046<br>US 5398953 | A<br>A | 01-03-1994<br>21-03-1995 |
| EP 1331158 | A | 30-07-2003 | US 2003158642 | A1 | 21-08-2003 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10345484 A1